# FASCICULE DE BREVET EUROPEEN

(11) **EP 1 907 734 B1**
(45) Date de publication et mention de la délivrance du brevet: **11.03.2009**
(21) Numéro de dépôt: 06777947.0
(22) Date de dépôt: 25.07.2006
(51) Int. Cl.: F16K 13/10

(54) **PROCEDE DE COMMANDE D'UNE COMMUNICATION ENTRE DEUX ZONES PAR ELECTROMOUILLAGE, DISPOSITIF COMPORTANT DES ZONES ISOLABLES LES UNES DES AUTRES ET PROCEDE DE REALISATION D'UN TEL DISPOSITIF**
VERFAHREN ZUR STEUERUNG DER KOMMUNIKATION ZWISCHEN ZWEI ELEKTROBENETZUNGSZONEN, VORRICHTUNG MIT ZONEN, DIE VONEINANDER GETRENNT WERDEN KÖNNEN UND VERFAHREN ZUR HERSTELLUNG SOLCH EINER VORRICHTUNG
METHOD FOR CONTROLLING COMMUNICATION BETWEEN TWO ELECTROWETTING ZONES, DEVICE COMPRISING ZONES CAPABLE OF BEING ISOLATED FROM ONE ANOTHER AND METHOD FOR MAKING SUCH A DEVICE

(30) Priorité: 25.07.2005 FR 0552299
(43) Date de publication de la demande: 09.04.2008
(73) Titulaire: COMMISSARIAT A L'ENERGIE ATOMIQUE, 75015 Paris (FR)
(72) Inventeur: JARY, Dorothée, F-38360 Sassenage (FR)
(74) Mandataire: Poulin, Gérard
(86) Numéro de dépôt international: PCT/EP2006/064613
(87) Numéro de publication internationale: WO 2007/012638

(56) Documents cités:
- EP-A- 1 347 353
- FR-A- 2 841 063
- US-A1- 2003 019 522
- US-A1- 2004 055 536
- US-B1- 6 379 929
- POLLACK M G ET AL: "ELECTROWETTING-BASED ACTUATION OF DROPLETS FOR INTEGRATED MICROFLUIDICS" LAB ON A CHIP, ROYAL SOCIETY OF CHEMISTRY, CAMBRIDGE, GB, vol. 2, no. 2, 11 mars 2002 (2002-03-11), pages 96-101, XP008038786 ISSN: 1473-0197 cité dans la demande

## Description

### DOMAINE TECHNIQUE ET ART ANTÉRIEUR

La présente invention se rapporte à un procédé de commande d'une communication entre deux zones par électromouillage, à un dispositif comportant des zones isolables les unes des autres et aptes à contenir, notamment, des liquides, des solides et/ou des gaz et à un procédé de fabrication dudit dispositif.

Un des modes de déplacement ou de manipulation les plus utilisés repose sur le principe de l'électromouillage sur un diélectrique, comme décrit dans l'article de M.G. Pollack, A.D. Shendorov, R.B. Fair, intitulé « Electro-wetting-based actuation of droplets for integrated microfluidics », Lab Chip 2 (1) (2002) 96-101.

Les forces utilisées pour le déplacement sont des forces électrostatiques.

Le document FR 2 841 063 décrit un dispositif mettant en oeuvre un caténaire en regard des électrodes activées pour le déplacement.

Le principe de ce type de déplacement est le suivant.

Une goutte repose sur un réseau d'électrodes, dont elle est isolée par une couche diélectrique et une couche hydrophobe.

Lorsqu'une électrode située à proximité de la goutte est activée, la couche diélectrique et la couche hydrophobe, entre cette électrode activée et la goutte polarisée par une électrode, agissent comme une capacité. Les effets de charge électrostatique induisent le déplacement de la goutte sur cette électrode. L'électrode peut être un caténaire, il maintient alors un contact électrique avec la goutte pendant son déplacement, comme décrit dans le document FR - 2 841 063.

La goutte peut ainsi être déplacée de proche en proche, sur la surface hydrophobe, par activation successive des électrodes de la matrice d'électrodes et par guidage le long du caténaire.

Il est donc possible de déplacer des liquides, mais aussi de les mélanger (en faisant s'approcher des gouttes de liquides différents), et de réaliser des protocoles complexes.

Les documents cités ci-dessus donnent des exemples de mises en oeuvre de séries d'électrodes adjacentes pour la manipulation d'une goutte dans un plan.

Ce type de déplacement est de plus en plus utilisé dans des dispositifs appelés biopuces, en vue d'analyses biochimiques, chimiques ou biologiques, que ce soit dans le domaine médical, ou dans la surveillance environnementale, ou dans le domaine du contrôle de qualité.

Afin de pouvoir effectuer les analyses précédemment énoncées, il est intéressant de pouvoir disposer sur la biopuce de zones isolées les unes des autres et aptes à être mises en communication, de manière à permettre un mélange de réactifs contenus dans au moins deux zones et/ou de pouvoir acheminer les réactifs vers une zone d'analyse sur un support solide, par exemple une zone de détection par fluorescence.

Il est connu des microsystèmes comportant des parois en résine munies de passages de communication obturés par des vannes, lesdites vannes étant actionnables pour permettre ou non la communication entre différentes zones.

Par exemple, des documents Robin Hui Liu et al., Anal. Chem. 2004, 76, 1824-1831 et Rohit Pal et al., Anal. Chem. 2004, 76, 3740-3748*,* il est connu de réaliser une vanne en matériau fusible du type cire ou paraffine, qui bouche ou non le passage de communication en fonction de la température. Ce matériau est déposé lors de la fabrication du microsystème. Pour ouvrir la vanne, la cire est chauffée puis déplacée par application d'une pression pneumatique. Ce type de vanne nécessite donc de prévoir un générateur de pression ou une réserve de pression pour écarter le bouchon fondu du passage de communication .

Il est également connu du document Robin Hui Liu et al., *Journal of microelectromechanical systems 2002, 11, 45-53*, une vanne comportant une membrane et des plots d'hydrogel. Lorsque l'hydrogel gonfle, il déforme la membrane, qui obture un passage de communication. Le passage est ouvert lorsque le gel est dégonflé. Le gonflement et le dégonflement des plots sont obtenus, par exemple, par modification du pH ou de la température.

Le document US 6 379 929 décrit la mise en place dans une ouverture d'une substance apte à passer à un état liquide ou solide sous l'action d'un élément chauffant

Cependant, la réalisation de telles vannes nécessite de prévoir leur emplacement lors de la fabrication de la puce et l'utilisation d'un masquage physique et d'une insolation lumineuse pour effectuer une polymérisation locale. Une fois les vannes mises en place, elles ne peuvent pas être déplacées sur la puce en fonction des souhaits de l'utilisateur.

C'est par conséquent un but de la présente invention d'offrir un dispositif comportant des zones aptes à communiquer entre elles au moyen de passages de communication, les passages pouvant être ouverts et fermés plusieurs fois.

C'est également un but de la présente invention d'offrir une grande flexibilité dans la création des passages de communication et dans l'obturation de ceux-ci.

### EXPOSÉ DE L'INVENTION

Les buts précédemment énoncés sont atteints par l'utilisation du principe de déplacement de goutte de liquide par électromouillage, afin de déplacer une substance apte à changer d'état en lui appliquant une stimulation extérieure afin qu'elle forme ou non un obturateur. La substance, lorsqu'elle est sous forme liquide, peut être mise en place par électromouillage dans un passage à obturer, puis la substance est solidifiée ou transformée en gel afin de former un bouchon. Si l'on souhaite ouvrir le passage, la substance est liquéfiée et retirée du passage par électromouillage.

La présente invention a alors principalement pour objet l'utilisation d'un dispositif de déplacement de gouttes de liquide par électromouillage pour la commande d'au moins une communication entre deux zones, au moyen d'au moins une substance apte à réagir à au moins un stimulus extérieur pour changer d'état.

La présente invention a également pour objet un procédé d'isolation de deux zones délimitées par au moins une paroi comportant une étape :
- de mise en place, par électromouillage, dans une ouverture de ladite paroi d'une substance apte à réagir à au moins un stimulus extérieur pour passer d'un état liquide à un état solide ou de gel, formant obturateur.

La présente invention a également pour objet un procédé de mise en communication de deux zones délimitées par une paroi comportant une étape :
- de retrait, par électromouillage, d'une ouverture de ladite paroi d'une substance apte à réagir à au moins un stimulus extérieur pour passer d'un état solide ou de gel à un état liquide.

La présente invention a également pour objet un procédé de commande de la communication entre deux zones délimitées par au moins une paroi utilisant :
- un procédé d'isolation selon la présente invention,
- un procédé de mise en communication selon la présente invention.

L'application du stimulus peut comporter, par exemple, une modification de la température de la substance et/ou un éclairage de celle-ci et/ou une application d'un champ magnétique et/ou une variation d'une force ionique et/ou une mise en contact avec au moins une deuxième goutte de liquide apte à modifier l'état de la substance, avec ladite substance.

De manière avantageuse, ladite deuxième goutte est amenée en contact avec ladite substance par électromouillage

Dans un exemple de réalisation, ladite substance comporte un sucre, pouvant être mise en place sous forme liquide dans l'ouverture entre les deux zones, puis chauffée jusqu'à cristallisation du sucre, pour fermer la communication, et/ou pouvant, sous forme cristallisée, être mise en contact avec une goutte de solution aqueuse par électromouillage, puis retirée sous forme liquide contenant le sucre, pour ouvrir la communication .

De manière avantageuse, ledit procédé comporte une étape de chauffage pendant la mise en contact.

Dans un autre exemple, ladite substance comporte un polymère thermosensible, pouvant être mise en place sous forme de particules en suspension dans une goutte de liquide dans l'ouverture entre les deux zones, puis chauffée jusqu'à solubilisation dudit polymère, et refroidie jusqu'à la formation d'un gel pour fermer la communication, et/ou pouvant, sous forme de gel, être mise en contact avec une goutte contenant une enzyme apte à dissoudre le gel par électromouillage, et/ou être chauffée puis retirée sous forme liquide contenant le polymère, pour ouvrir la communication.

Par exemple, lorsque le polymère est l'agarose, on utilise la β-agarase pour dissoudre le gel d'agarose.

La température de chauffage de l'agarose non solubilisé est avantageusement comprise entre 40°C et 80°C, et la température de refroidissement est avantageusement comprise entre 4°C et 40°C.

De manière avantageuse, la température de chauffage du gel d'agarose est comprise entre 40°C et 80°C.

La présente invention a également pour objet un dispositif permettant la mise en oeuvre d'un procédé selon la présente invention, comportant au moins deux zones séparées par une paroi, au moins un passage de communication formé dans ladite paroi, au moins une première substance sous forme d'une première goutte de liquide ou d'un solide ou d'un gel, ladite substance sous forme liquide étant apte à se transformer en solide ou gel lorsqu'elle est soumise à au moins un premier stimulus et/ou ladite substance sous forme solide ou de gel étant apte à se liquéfier lorsqu'elle est soumise à au moins un deuxième stimulus, des moyens de déplacement par électromouillage de ladite substance pour l'amener dans le passage de communication ou l'en éloigner et des moyens pour appliquer au moins l'un desdits stimuli à la substance.

Les moyens pour appliquer au moins un desdits stimuli comportent, par exemple au moins un moyen de chauffage et/ou de refroidissement, et/ou un moyen pour éclairer la substance, et/ou un moyen de variation d'une force ionique, et/ou un moyen pour appliquer un champ magnétique à la substance et/ou un moyen de mise en contact de la substance avec une deuxième goutte de liquide apte à réagir avec la substance en place dans le passage, de manière à transformer la substance liquide, en solide ou en gel et la substance solide ou en gel, en liquide.

Le moyen de chauffage peut être une résistance disposée dans le substrat.

De manière avantageuse, le moyen de mise en contact de la substance avec la deuxième goutte de liquide comporte des moyens de déplacement par électromouillage.

Les parois sont réalisées de manière avantageuse en résine.

Par exemple, la substance est un sucre.

La substance peut comporter un polymère thermosensible par exemple de l'agarose, de la pectine, carraghénane, gélatine, l'alginate de calcium, un dérivé de la cellulose, de la chitosane en présence d'acide, un polymère synthétique utilisé dans un solvant adapté tel que du polychlorure de vinyle, du poloxamère (Pluronic®), du polystyrène, et/ou du polyméthacrylate de méthyle.

La deuxième goutte est avantageusement une enzyme, par exemple du β-agarase dans le cas de l'agarose.

La substance peut également être une résine différente de celle formant les parois et apte à passer d'un état liquide à un état solide ou d'un état liquide à un état solide.

Les zones peuvent comporter au moins une zone de stockage d'un fluide isolant électrique et/ou au moins une zone de stockage d'au moins un réactif sec et/ou au moins une zone de stockage d'au moins un réactif liquide et/ou au moins une zone de stockage de gaz et/ou au moins une zone de détection de fluorescence sur un support solide.

De manière supplémentaire, il peut être prévu au moins une zone de stockage de la substance sous forme liquide.

De manière préférée, le dispositif selon la présente invention comporte des moyens de déplacement par électromouillage entre les différentes zones.

Dans un exemple de réalisation, des réactions d'hybridation d'ADN, et/ou de réactions antigène/anticorps entre protéines sont réalisées sur un support solide, par exemple dans la zone de détection de fluorescence.

Les dispositifs d'électromouillage comportent, de manière avantageuse, un substrat à surface hydrophobe muni d'un réseau d'électrodes d'électromouillage et des moyens électriquement conducteurs formant contre-électrode des électrodes d'électromouillage, disposés en vis-à-vis, pouvant être reliés à des moyens d'alimentation électrique pour permettre l'application de force électrostatique à la goutte de liquide.

Le dispositif selon la présente invention peut comporter un deuxième substrat en regard de la surface hydrophobe, formant capot.

La contre-électrode peut être portée par le capot ou être formée d'un fil conducteur suspendu.

La présente invention a également pour objet un procédé de fabrication comportant les étapes :
- de dépôt sur un substrat d'une première couche de résine,
- de dépôt d'un masque et de gravure de ladite première couche de résine pour former des parois,
- de dépôt d'une deuxième couche de résine et de gravure de celle-ci pour former les bouchons.

### BRÈVE DESCRIPTION DES DESSINS

La présente invention sera mieux comprise à l'aide de la description qui va suivre et des dessins en annexe, sur lesquels :
- la figure 1 est une vue schématique de dessus d'un dispositif selon la présente invention ;
- les figures 2a à 2c sont des vues partielles de côté du dispositif de la figure 1 ;
- les figures 3a à 3g représentent les différentes étapes d'un procédé selon la présente invention ;
- les figures 4 à 7 sont des représentations schématiques de détails de variantes de réalisation du dispositif selon la présente invention.

### EXPOSÉ DÉTAILLÉ DE MODES DE RÉALISATION PARTICULIERS

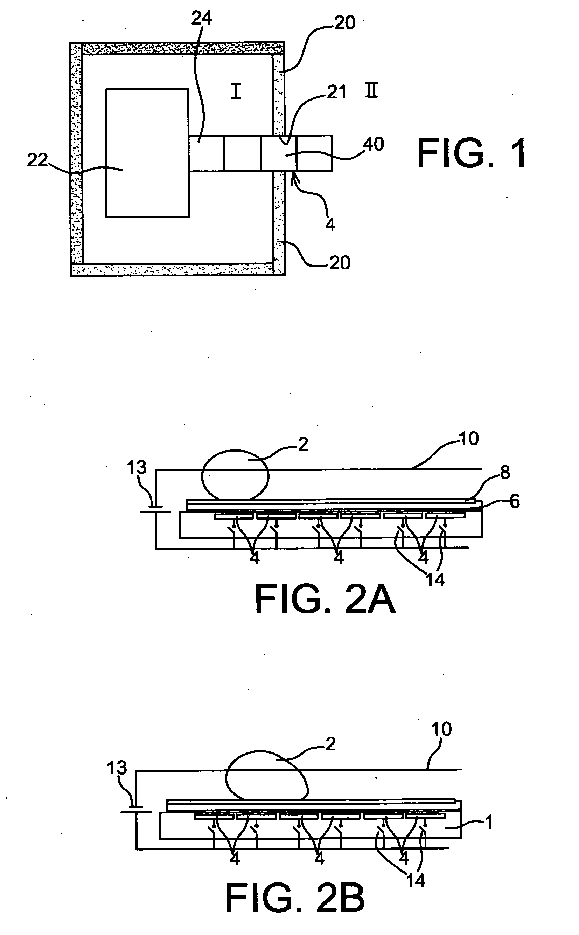

Sur la figure 1, on peut voir un dispositif selon la présente invention comportant au moins une zone I, une zone II séparées par une cloison 20, par exemple en résine. La cloison 20 comporte au moins une ouverture 21 permettant une communication entre les zones I et II. Ces zones I, II forment des compartiments aptes à recevoir des produits que l'on souhaite isoler les uns des autres, au moins pour un temps. Seuls deux compartiments sont représentés, cependant plus de deux compartiments peuvent être prévus comme il sera décrit par la suite. Les passages de communication seront prévus suivant le type de compartiment.

Le dispositif selon l'invention est, un microsystème par exemple, une puce d'analyse, dite biopuce, sur laquelle des réactions entre des petites gouttes ou petits volumes de liquide sont réalisées. Ces gouttes de liquide sont déplacées avantageusement par électromouillage.

Le compartiment I comporte une électrode réservoir 22 sur laquelle se trouvent le produit à isoler de la zone II, et un réseau d'électrode 4 pour permettre le déplacement de la substance destinée à obturer le passage. Dans l'exemple représenté, une extrémité 24 du réseau 4 est adjacente à l'électrode 22 pour également permettre le déplacement du produit par électromouillage, tel que cela va être décrit par la suite. On pourrait, toutefois, prévoir un réseau d'électrodes séparé.

Le réseau 4 comporte au moins une électrode 40 située au plus près du passage 21, avantageusement dans le passage 21 de manière à placer la substance destinée à obturer le passage sensiblement dans le passage 21.

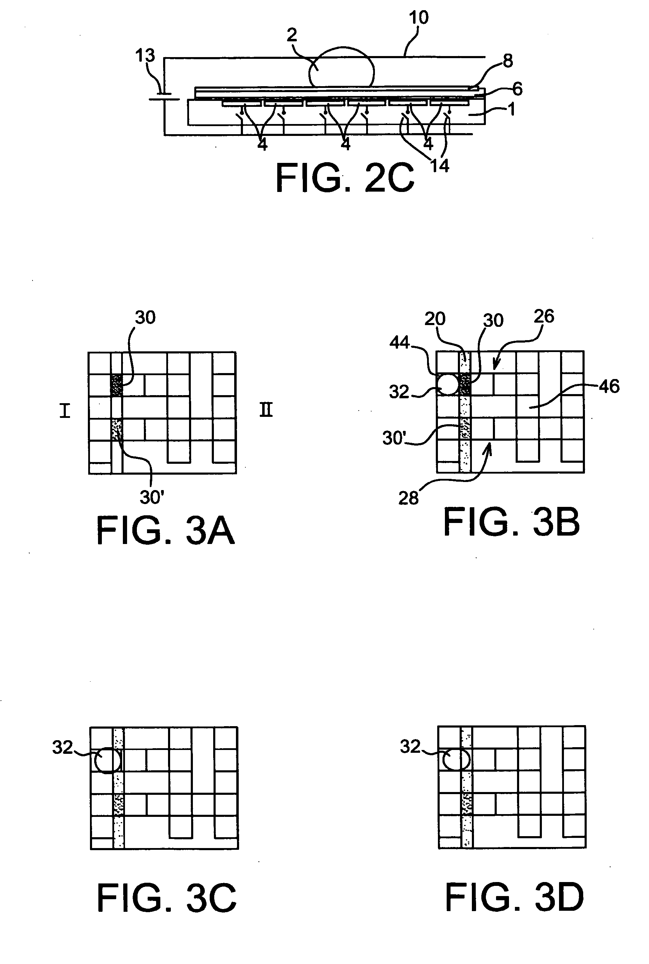

Sur les figures 2a à 2c, on peut voir une vue de côté partielle des premiers moyens de déplacement 4 par électromouillage, synthétisant lé principe de ce type de déplacement.

Des exemples de tels dispositifs sont décrits dans l'article de M.G. Pollack, A.D. Shendorov, R.B. Fair, intitulé « Electro-wetting-based actuation of droplets for integrated microfluidics », Lab Chip 2 (1) (2002) 96-101.

Les forces utilisées pour le déplacement de gouttes de liquide sont des forces électrostatiques.

Le document FR 2 841 063 décrit également un dispositif mettant en oeuvre, en outre, une caténaire en regard des électrodes d'électromouillage pour le déplacement en tant que contre électrode.

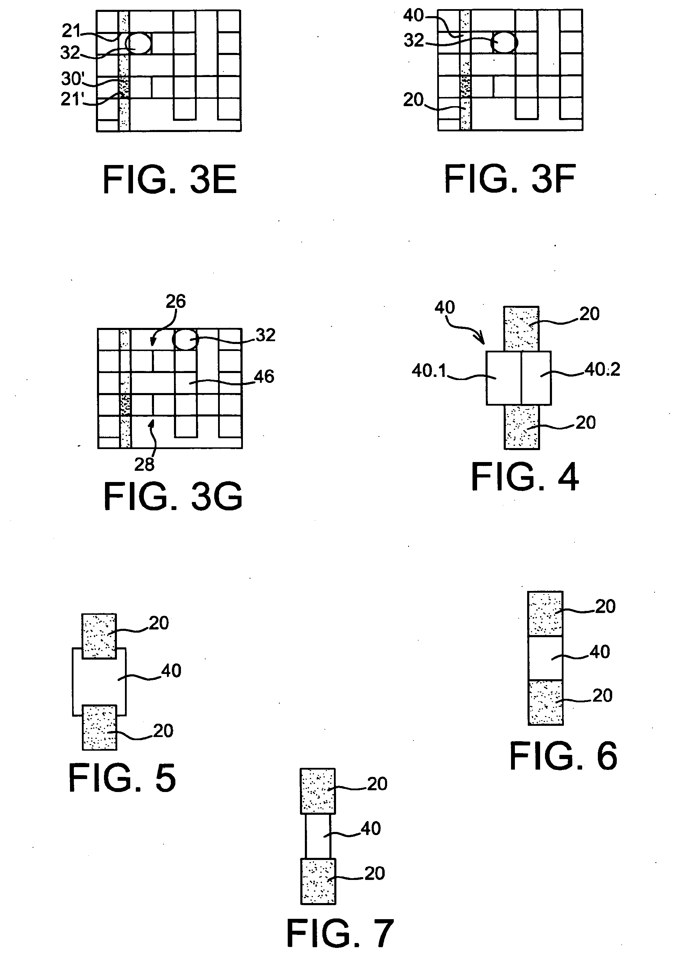

Une goutte 2 repose sur un réseau 4 d'électrodes, dont elle est isolée par une couche diélectrique 6 et une couche hydrophobe 8 (figure 3A).

Le caractère hydrophobe de cette couche signifie que la goutte a un angle de contact, sur cette couche, supérieur à 90°.

Les électrodes sont elles-mêmes formées en surface d'un substrat 1.

Lorsque l'électrode du réseau 4 située à proximité de la goutte 2 est activée, à l'aide de moyens 14 de commutation, dont la fermeture établit un contact entre cette électrode et une source de tension 13 via un conducteur commun 16, la couche diélectrique 6 et la couche hydrophobe 8 entre cette électrode activée et la goutte, polarisée en permanence par une contre électrode 10, agissent comme une capacité. Les effets de charges électrostatiques induisent le déplacement de la goutte sur l'électrode activée. La contre électrode 10 permet le déplacement par électromouillage, elle maintient un contact électrique avec la goutte pendant son déplacement. Cette contre-électrode 10 peut être soit un caténaire comme décrit dans FR - 2 841 063, soit un fil enterré, soit une électrode planaire sur ou dans le capot des systèmes confinés.

Les gouttes baignent avantageusement dans un liquide non miscible avec celui des gouttes, par exemple de l'huile lorsque les gouttes sont formées d'une solution aqueuse. Ceci permet d'éviter l'évaporation des gouttes et de modifier la tension nécessaire aux déplacements, grâce à la diminution de la tension interfaciale entre la solution aqueuse formant les gouttes et l'huile, par rapport à la tension interfaciale entre la solution aqueuse et l'air.

Ainsi des gouttes contenues dans les différents compartiments peuvent être mises en contact, pour diluer une substance ou faire réagir une substance contenue dans une des gouttes.

Les compartiments peuvent être de différents types. Un premier type de compartiment peut former une zone de stockage de réactifs secs, dans ce cas au moins une goutte de liquide pénétrera dans le compartiment pour dissoudre le réactif sec et permettre son déplacement sous forme de goutte de liquide. De manière avantageuse, on peut prévoir autant de compartiments que de réactifs secs différents afin d'éviter tout risque de contamination des réactifs les uns par les autres. Un deuxième type de compartiment peut être une zone de stockage de réactifs liquides. Un troisième type de compartiment peut contenir un gaz.

Un quatrième type de compartiment peut être une zone de détection, par exemple une zone de détection de fluorescence dans laquelle est amené un produit contenant des substances à analyser, par exemple pour en mesurer la concentration. Des réactions peuvent être réalisées dans cette zone, telles que des réactions d'hybridation d'ADN ou des réactions antigène/anticorps entre protéines.

On peut également prévoir un cinquième type de compartiment contenant le fluide électriquement isolant, par exemple, une huile silicone, permettant son confinement jusqu'à l'utilisation du dispositif.

De manière préférée, la zone de détection est isolée du fluide isolant électrique, pour réduire les bruits de fond générés par le fluide isolant électrique.

En effet, dans le cas d'une puce d'hybridation, le liquide non miscible avec une phase aqueuse présent sur cette puce peut gêner la détection. D'une part, celui-ci peut former une pellicule liquide sur les molécules d'ADN présentes sur la surface de la puce d'hybridation, le liquide non miscible diminuera alors l'accessibilité de ces molécules d'ADN et donc le rendement d'hybridation. D'autre part, ce liquide non miscible peut se disperser sous forme de gouttelettes dans et/ou sur la goutte de solution aqueuse, ce qui va générer un signal de fluorescence inhomogène avec un fort bruit de fond non reproductible entre les différentes expériences.

Il est également préférable d'isoler cette zone de détection du fluide isolant électrique car le stockage des molécules d'ADN greffées sur la surface de la zone d'hybridation sera meilleur sous atmosphère sèche ou inerte que sous un liquide.

Selon la présente invention, il est prévu de commander l'ouverture et la fermeture des passages de communication entre les compartiments au moyen d'un dispositif de déplacement par électromouillage, tel que décrit précédemment pour les gouttes de liquide à analyser.

Le procédé selon la présente invention commande la communication entre les zones I et II et comporte l'étape suivante :
- de mise en place ou de retrait d'un obturateur par électromouillage, ledit obturateur comportant une substance apte à réagir à au moins un stimulus extérieur pour changer d'état.

En particulier, il est ainsi prévu de déplacer au moins un goutte de liquide, la goutte contenant une substance apte à se solidifier ou à se gélifier, le déplacement ayant lieu par électromouillage le long du réseau 4, jusqu'au passage de communication à obturer. On fait ensuite réagir cette substance contenue dans la goutte de liquide pour former un bouchon.

On entend par solide ou gel, toute substance qui ne coule pas spontanément sur une surface et ne se déforme pas lorsqu'une tension est appliquée sur les électrodes voisines de celles sur laquelle se trouve la goutte de solide ou de gel.

Le changement d'état de la substance peut être provoqué par au moins l'un des stimuli suivants donnés à titre d'exemple, un changement de température, notamment une élévation de la température, un changement de pH, ou de la composition d'un solvant contenant la substance, un produit avec lequel la substance va réagir, une application d'une lumière, un changement d'une force ionique, et/ou une application d'un champ magnétique.

La substance ainsi solidifiée ou gélifiée est en contact avec la paroi 20, de part et d'autre du passage. Ce bouchon obture ainsi de manière étanche la communication entre les zones I et II.

L'élévation de la température peut être obtenue, par exemple, par une zone chauffante présente sous la puce ou par une résistance chauffante disposée dans la puce. La zone chauffante est une zone de taille définie qui comporte une ou plusieurs électrodes, et dont la température peut être augmentée ou diminuée sur commande. La zone chauffante ou la résistance chauffante est placée au droit du passage de communication, ainsi la substance est solidifiée ou gélifiée directement dans le passage à obturer.

Les moyens de chauffage peuvent également être formés par des caténaires.

Dans le cas où le changement d'état de la substance est obtenu par une modification du pH ou par une réaction avec un réactif chimique, par un changement de solvant ou de la force ionique, ce changement d'état est obtenu par une mise en contact de la substance avec une goutte de liquide apte à faire varier le paramètre recherché, pour transformer la substance en solide ou en gel. De manière avantageuse, la deuxième goutte de liquide est déplacée, par électromouillage, jusqu'au passage à obturer.

L'ouverture du passage de communication peut se faire, par exemple, en amenant, avantageusement par électromouillage une troisième goutte de liquide apte à dissoudre le solide ou le gel formant l'obturateur.

Une modification, notamment une augmentation de la température, ou une action de la lumière, ou une variation du pH, ou l'action d'une enzyme, ou la variation de la force ionique, l'application d'un champ magnétique, ou la réaction avec un réactif chimique peut être envisagées selon la substance utilisée. Il est bien entendu que le changement d'état peut résulter d'un ou de plusieurs stimuli dans la liste non exhaustive ci-dessus.

Nous allons maintenant décrire à l'aide des figures 3a à 3g, le principe d'ouverture d'une communication entre deux zones.

Sur la figure 3a, on peut voir un dispositif muni de deux zones I et II séparées par une paroi de résine 20, de chemins de déplacement 26,28 par électromouillage de structure semblable à celle décrite précédemment, aptes à déplacer des petits volumes de liquide entre les zones I et II.

Les chemins 26, 28 traversent la paroi 20 respectivement au niveau de deux passages 21,21' pratiqués dans la paroi 20 et obturés sur la figure 3a par un bouchon 30, 30' respectivement. Ces bouchons 30 sont aptes à se liquéfier sous l'action d'au moins un stimulus extérieur, parmi ceux cités précédemment.

Dans l'exemple représenté, les bouchons sont aptes à se dissoudre au contact d'une goutte de solvant 32.

Sur la figure 3b, la goutte de solvant est disposée sur le chemin 26 sur une électrode 44 adjacente à l'électrode 40 au droit du passage 21.

Sur la figure 3c, l'électrode 40 est activée, la goutte 32 est déplacée en direction du bouchon 30 et vient en contact de celui-ci. Le bouchon se dissout, jusqu'à libérer complètement le passage 21 (figure 3d).

Sur les figures 3e à 3g, les électrodes suivantes du chemin 26 sont ensuite chacune leur tour activées, provoquant le déplacement de la goutte 32 chargée de la substance dissoute du bouchon 30, pour libérer le passage 21.

Cette goutte 30 peut être utilisée pour dissoudre le bouchon 30' en rejoignant le chemin 28 raccordé au chemin 26 par des électrodes 46 ou être évacuée. Cette goutte 32 peut également être stockée et être utilisée pour reformer le bouchon 30, par exemple en chauffant la goutte 30, lorsqu'elle se trouve sur l'électrode 40.

La substance peut comporter un polymère thermosensible pouvant être amené sous forme de particules en suspension dans une goutte de liquide dans l'ouverture entre les deux zones puis chauffée jusqu'à solubilisation du polymère et refroidie jusqu'à formation d'un gel pour fermer la communication. Le polymère pourra être par exemple de l'agarose, un gélifiant habituellement utilisé dans l'industrie alimentaire ou pharmaceutique (pectine, carraghénane, gélatine, l'alginate de calcium, dérivés de la cellulose, chitosane en présence d'acide ...), ou un polymère synthétique utilisé dans un solvant adapté tel que du polychlorure de vinyle, du poloxamère (aussi connu sous le nom de Pluronic®), du polystyrène, du polyméthacrylate de méthyle (PMMA). Suivant les cas, le gel formé pourra être mis en contact avec une goutte contenant une enzyme détruisant le gel (par exemple la β-agarase dans le cas d'un gel d'agarose) par électromouillage, et/ou être chauffé puis retiré sous forme liquide contenant le polymère pour ouvrir la communication .

Deux exemples de fermeture et d'ouverture d'un passage de communication selon la présente invention, vont être décrits.

Les zones I et II vont contenir respectivement des substances que l'on souhaite isoler dans un premier temps.

Une goutte d'eau contenant du sucre est amenée, par électromouillage, dans le passage 21 entre les zones I et II à obturer. La goutte de liquide est chauffée, tel que décrit précédemment, ce qui provoque l'évaporation de l'eau de la goutte et la cristallisation du sucre dans le passage. La communication entre les deux zones est alors interrompue. La taille résultante du sucre cristallisé est prévue de manière à ce qu'il entre en contact avec la paroi de résine pour obturer complètement le passage 21.

Lorsque l'on souhaite à nouveau ouvrir la passage, pour, par exemple, faire réagir les produits contenus dans chacun des compartiments, une goutte de liquide, par exemple de l'eau, est amenée par électromouillage en contact du sucre cristallisé. Les cristaux de sucre se solubilisent. On peut prévoir, de manière additionnelle, de chauffer pour accélérer la solubilisation du sucre.

Lorsque le sucre est solubilisé dans la goutte d'eau, cette dernière est retirée du passage, par électromouillage, pour le libérer. Le passage est à nouveau ouvert, on peut alors prévoir de déplacer par électromouillage les produits contenus dans les compartiments désormais en communication pour les faire réagir.

La goutte d'eau contenant le sucre peut être évacuée ou stockée, pour une autre utilisation dans le même passage ou dans un autre passage.

Le sucre présente l'avantage d'être biocompatible, son utilisation ne nécessite donc pas de précautions particulières, par exemple, ne nécessite pas de rincage.

Ainsi la puce peut comporter une zone de stockage de substances aptes à former obturateur. Ces substances peuvent être conservées sous forme liquide ou solide. Dans ce dernier cas, on prévoit d'amener une goutte de liquide pour solubiliser la substance et ensuite de transporter la goutte de liquide contenant la substance dans le passage à obturer.

Il est également envisageable de refermer à nouveau le passage de communication, par exemple dans le cas où les compartiments forment des réservoirs, dans lesquels le produit est prélevé en plusieurs fois. Après chaque prélèvement, le passage est obturé.

Dans un autre exemple de réalisation, une porte pour obturer un passage de communication peut également être formée par l'agarose. Pour obturer un passage, une goutte contenant de l'agarose non solubilisé est amenée dans le passage à obturer. La goutte est ensuite chauffée à une température comprise avantageusement entre 40°C et 80°C, par exemple 70°C par les moyens précédemment décrits, pour solubiliser l'agarose, puis refroidie à une température inférieure comprise avantageusement entre 4°C et 40°C, par exemple 30°C pour provoquer une gélification de l'agarose. Le passage est alors obturé par ce gel.

Lorsque l'on souhaite ouvrir ce passage, on élève à nouveau la température du passage au-dessus de 70°C pour faire fondre l'agarose. Lorsque l'agarose est sous forme liquide, la goutte d'agarose liquide est déplacée par électromouillage pour l'écarter du passage.

On peut également prévoir pour ouvrir le passage d'amener une solution de β-agarase par électromouillage en contact du gel d'agarose. La β-agarase a pour effet de couper les grandes chaînes en sous unités ce qui transforme l'agarose gélifié en agarose liquide. Simultanément, l'agarose est chauffé pour aider à cette liquéfaction à une température avantageusement comprise entre 40°C et 80°C, par exemple 37°C.

De manière avantageuse, le réseau d'électrodes pour le déplacement de la substance obturatrice peut servir pour le déplacement des produits contenus dans les compartiments.

On peut prévoir de réaliser directement des puces comportant des parois munies d'un passage obturé par un solide ou un liquide qui sera facilement transformable en liquide, comme décrit précédemment et de prévoir l'ouverture de ces passages lors de l'utilisation de la puce.

On peut, par exemple, prévoir lors de la fabrication de déposer aux endroits des passages, une résine différente de celle des parois. Cette résine sera, par exemple, très peu recuite afin d'être facilement supprimée avec une goutte de solvant, type alcool ou acétone. Puis afin de pouvoir ouvrir et fermer les passages à volonté, une solution contenant une autre substance apte à changer d'état plusieurs fois, par exemple une solution aqueuse concentrée, telle qu'une solution de sucre ou une solution de sel, type Na Cl est déposée sur la puce. Cette substance sera manipulée comme décrit précédemment.

Ce mode de réalisation présente l'avantage d'utiliser des techniques classiques de la microélectronique pour réaliser toute la puce, à la fois les bouchons et les parois.

Dans le cas où le solvant n'est pas compatible avec l'utilisation de la biopuce, il peut être prévu un rinçage de la puce en faisant circuler, par exemple quelques gouttes d'eau sur les chemins empruntés par les gouttes de solvant.

Ce procédé de fabrication comporte donc les étapes :
- de dépôt sur un substrat d'une première couche de résine,
- de dépôt d'un masque et de gravure de ladite première couche de résine pour former les parois définitives,
- de dépôt d'une deuxième couche de résine et de gravure de celle-ci pour former les bouchons.

Sur les figures 4 à 6, on peut voir différents exemples de réalisation de l'électrode d'électromouillage située au niveau du passage de communication, qui sera un siège de la transformation d'état de la goutte.

Sur la figure 4, l'électrode 40 est formée par deux électrodes 40.1 et 40.2 permettant d'amener une première et une deuxième gouttes de liquide, la première contenant, par exemple, la substance apte à changer d'état et la deuxième goutte contenant un réactif ou une solution, par exemple, apte à modifier le pH de la première goutte pour provoquer la solidification ou la gélification de la substance.

On peut prévoir également une électrode 40 ayant une largeur supérieure à celle des parois (figure 5), égale à celle des parois (figure 6) ou inférieure à celle des parois (figure 7).

La taille et la forme de l'électrode 40 modifient la taille et la forme de l'obturateur solide ou sous forme de gel. La forme de l'électrode 40 sera notamment choisie afin d'obtenir un obturateur solide ou gel étanche.

Le choix du matériau formant le bouchon s'effectue en fonction des produits contenus dans les compartiments à isoler.

La présente invention permet de créer des portes de séparation de compartiments en fonction des utilisations de la puce. On peut ainsi garantir l'absence de contamination entre les réactifs embarqués sur la puce lors de son transport et de sa manipulation avant son utilisation pour le test prévu et également préserver des zones telles qu'une zone de détection, type puce à ADN, du contact avec le liquide isolant type huile permettant les manipulations des gouttes par électromouillage.

On peut prévoir d'obturer ou d'ouvrir plusieurs passages simultanément en commandant, de manière adéquate, les moyens d'adressage des électrodes pour amener les gouttes contenant les substances ou les réactifs au niveau des passages.

## Revendications

1. Procédé d'isolation de deux zones délimitées par au moins une paroi (20) comportant une étape :
- de mise en place, par électromouillage, dans une ouverture (21) de ladite paroi (20) d'une substance apte à réagir à au moins un stimulus extérieur pour passer d'un état liquide à un état solide ou de gel, formant obturateur.

2. Procédé de mise en communication de deux zones délimitées par une paroi (20) comportant une étape :
- de retrait, par électromouillage, d'une ouverture (21) de ladite paroi (20) d'une substance apte à réagir à au moins un stimulus extérieur pour passer d'un état solide ou de gel à un état liquide.

3. Procédé de commande de la communication entre deux zones délimitées par au moins une paroi (20) utilisant :
- un procédé d'isolation selon la revendication 1,
- un procédé de mise en communication selon la revendication 2.

4. Procédé selon l'une des revendications 1 à 3, dans lequel l'application du stimulus comporte une modification de la température de la substance et/ou un éclairage de celle-ci et/ou une application d'un champ magnétique et/ou une variation d'une force ionique et/ou une mise en contact avec au moins une deuxième goutte de liquide apte à modifier l'état de la substance, avec ladite substance.

5. Procédé selon la revendication précédente, dans lequel ladite deuxième goutte est amenée en contact avec ladite substance par électromouillage

6. Procédé selon l'une quelconque des revendications 1 à 5, ladite substance comportant un sucre, pouvant être mise en place sous forme liquide dans l'ouverture (21) entre les deux zones, puis chauffée jusqu'à cristallisation du sucre, pour fermer la communication, et/ou pouvant, sous forme cristallisée, être mise en contact avec une goutte de solution aqueuse par électromouillage, puis retirée sous forme liquide contenant le sucre, pour ouvrir la communication.

7. Procédé selon la revendication précédente, comportant une étape de chauffage pendant la mise en contact.

8. Procédé selon l'une quelconque des revendications 1 à 5, ladite substance comportant un polymère thermosensible, pouvant être mise en place sous forme de particules en suspension dans une goutte de liquide dans l'ouverture (21) entre les deux zones, puis chauffée jusqu'à solubilisation, et refroidie jusqu'à la formation d'un gel pour fermer la communication, et/ou pouvant, sous forme de gel, être mise en contact avec une goutte d'enzyme apte à dissoudre le gel par électromouillage, et/ou être chauffée, puis retirée sous forme liquide contenant le polymère thermosensible, pour ouvrir la communication.

9. Procédé selon la revendication précédente, dans lequel le polymère est l'agarose et l'enzyme est la β-agarase.

10. Procédé selon la revendication précédente, dans lequel la température de chauffage de l'agarose non solubilisé est comprise entre 40°C et 80°C.

11. Procédé selon la revendication 9 ou 10, dans lequel la température de refroidissement est comprise entre 4°C et 40°C.

12. Procédé selon l'une quelconque des revendications 9 à 11, dans lequel la température de chauffage du gel d'agarose est comprise entre 40°C et 80°C.

13. Dispositif de déplacement de gouttes par électromouillage comportant au moins deux zones (I, II) séparées par une paroi (20), au moins un passage (21) de communication formé dans ladite paroi (20), au moins une première substance sous forme d'une première goutte de liquide ou d'un solide ou d'un gel, ladite substance sous forme liquide étant apte à se transformer en solide ou gel lorsqu'elle est soumise à au moins un premier stimulus et/ou ladite substance sous forme solide ou de gel étant apte à se liquéfier lorsqu'elle est soumise à au moins un deuxième stimulus, des moyens de déplacement par électromouillage de ladite substance pour l'amener dans le passage de communication ou l'en éloigner et des moyens pour appliquer au moins un stimulus à la substance.

14. Dispositif selon la revendication précédente, dans lequel les moyens pour appliquer le stimulus comportent au moins un moyen de chauffage et/ou de refroidissement, et/ou un moyen pour éclairer la substance, et/ou un moyen de variation d'une force ionique, et/ou un moyen pour appliquer un champ magnétique à la substance et/ou un moyen de mise en contact de la substance avec une deuxième goutte de liquide apte à réagir avec la substance en place dans le passage, de manière à transformer la substance liquide en solide ou en gel et la substance solide ou en gel en liquide.

15. Dispositif selon la revendication précédente, dans lequel le moyen de chauffage est une résistance disposée dans le substrat sur lequel est formée la paroi (20).

16. Dispositif selon la revendication 14 ou 15, dans lequel le moyen de mise en contact de la substance avec la deuxième goutte de liquide comporte des moyens de déplacement par électromouillage.

17. Dispositif selon l'une quelconque des revendications 13 à 16, dans lequel la paroi (20) de séparation est en résine.

18. Dispositif selon l'une quelconque des revendications 13 à 17, dans lequel la substance est un sucre.

19. Dispositif selon l'une quelconque des revendications 13 à 17, dans lequel la substance est un polymère thermosensible.

20. Dispositif selon la revendication précédente, dans lequel le polymère thermosensible est l'agarose, la pectine, la carraghénane, la gélatine, l'alginate de calcium, un dérivé de la cellulose, de la chitosane en présence d'acide, du polychlorure de vinyle, du poloxamère tel que le Pluronic®, du polystyrène et/ou du polyméthacrylate de méthyle.

21. Dispositif selon la revendication précédente, dans lequel lorsque la substance est un polymère thermosensible, la deuxième goutte est une enzyme apte à dissoudre ce gel.

22. Dispositif selon l'une quelconque des revendications 13 à 17, dans lequel la substance est une résine différente de celle formant les parois et apte à passer d'un état liquide à un état solide ou d'un état solide à un état liquide.

23. Dispositif selon l'une quelconque des revendications 13 à 22, dans lequel les zones comportent au moins une zone de stockage d'un fluide isolant électrique et/ou au moins une zone de stockage d'au moins un réactif sec et/ou au moins une zone de stockage d'au moins un réactif liquide et/ou au moins une zone de stockage de gaz et/ou au moins une zone de détection de fluorescence.

24. Dispositif selon l'une quelconque des revendications 13 à 23, comportant au moins une zone de stockage de la substance sous forme liquide.

25. Dispositif selon l'une quelconque des revendications 13 à 24, comportant des moyens de déplacement par électromouillage entre les différentes zones.

26. Dispositif selon l'une quelconque des revendications 13 à 25 en combinaison avec la revendication 23, dans lequel des réactions d'hybridation d'ADN, et/ou de réactions antigène/anticorps entre protéines sont réalisées dans la zone de détection de fluorescence.

27. Dispositif selon l'une quelconque des revendications 13 à 26, dans lequel les moyens d'électromouillage comportent un substrat à surface hydrophobe muni d'un réseau d'électrodes d'électromouillage et des moyens électriquement (10) conducteurs formant contre-électrode des électrodes d'électromouillage, disposés en vis-à-vis, lesdites électrodes et les moyens électriquement conducteurs pouvant être reliés à des moyens d'alimentation électrique pour permettre l'application de force électrostatique à la goutte de liquide.

28. Dispositif selon la revendication précédente, comportant un deuxième substrat en regard de la surface hydrophobe, formant capot.

29. Dispositif, selon la revendication précédente, dans lequel la contre-électrode est portée par le capot.

30. Procédé de fabrication d'un dispositif selon la revendication 22, comportant les étapes :
- de dépôt sur un substrat d'une première couche de résine,
- de dépôt d'un masque et de gravure de ladite première couche de résine pour former des parois (20),
- de dépôt d'une deuxième couche de résine et de gravure de celle-ci pour former les bouchons.

## Claims

1. A method for isolating two areas delimited by at least one wall (20) including a step for:
- placing by electrowetting in an aperture (21) of said wall (20), a substance capable of reacting to at least one external stimulus in order to pass from a liquid state to a solid or gel state forming a closure member.

2. A method for having two areas delimited by a wall (20) communicate, including a step for:
- removing by electrowetting from an aperture (21) of said wall (20), a substance capable of reacting to at least an external stimulus in order to pass from a solid or gel state to a liquid state.

3. A method for controlling the communication between two areas delimited by at least one wall (20) using:
- an isolation method according to claim 1,
- a communication method according to claim 2.

4. The method according to any of claims 1 to 3, wherein the application of the stimulus includes a change in the temperature of the substance and/or illumination of the latter and/or application of a magnetic field and/or variation of an ionic strength, and/or contacting said substance with at least one second drop of liquid capable of changing the state of the substance.

5. The method according to the preceding claim, wherein said second drop is brought into contact with said substance by electrowetting.

6. The method according to any of claims 1 to 5, said substance including a sugar, which may be placed as a liquid in the aperture (21) between both areas, and then heated until the sugar crystallizes, in order to close the communication, and/or which may, in the crystallized form, be put into contact with a drop of aqueous solution by electrowetting and then removed as a liquid containing the sugar, in order to open the communication.

7. The method according to the preceding claim, including a heating step during the contacting.

8. The method according to any of claims 1 to 5, said substance including a heat-sensitive polymer, which may be placed, as particles suspended in a drop of liquid, into the aperture (21) between both areas, and then heated until it solubilizes, and cooled until a gel forms for closing the communication, and/or which may, as a gel, be put into contact with a drop of enzyme capable of dissolving the gel by electrowetting, and/or be heated and then removed as a liquid containing the heat-sensitive polymer, in order to open the communication.

9. The method according to the preceding claim, wherein the polymer is agarose and the enzyme is β-agarase.

10. The method according to the preceding claim, wherein the temperature for heating the non-solubilized agarose is comprised between 40°C and 80°C.

11. The method according to claim 9 or 10, wherein the cooling temperature is comprised between 4°C and 40°C.

12. The method according to any of claims 9 to 11, wherein the temperature for heating the agarose gel is comprised between 40°C and 80°C.

13. A device for displacing drops by electrowetting including at least two areas (I, II) separated by a wall (20), at least one communication passage (21) formed in said wall (20), at least one first substance as a first drop of liquid or a solid or a gel, said substance as a liquid being capable of being transformed into a solid or a gel when it is subject to at least one first stimulus and/or said substance as a solid or a gel being capable of liquefying when it is subject to at least a second stimulus, means for displacing by electrowetting said substance in order to bring it into the communication passage or to move it away therefrom and means for applying at least one stimulus to the substance.

14. The device according to the preceding claim, wherein the means for applying the stimulus includes at least one heating means and/or cooling means, and/or a means for illuminating the substance, and/or a means for varying an ionic strength, and/or a means for applying a magnetic field to the substance and/or a means for putting the substance in contact with a second drop of liquid capable of reacting with the substance placed in the passage so as to transform the liquid substance into a solid or a gel and the solid or gel substance into a liquid.

15. The device according to the preceding claim, wherein the heating means is a resistor positioned in the substrate on which the wall (20) is made.

16. The device according to claim 14 or 15, wherein the means for putting the substance into contact with the second drop of liquid includes electrowetting displacement means.

17. The device according to any of claims 13 to 16, wherein the separation wall (20) is in resin.

18. The device according to any of claims 13 to 17, wherein the substance is a sugar.

19. The device according to any of claims 13 to 17, wherein the substance is a heat-sensitive polymer.

20. The device according to the preceding claim, wherein the heat-sensitive polymer is agarose, pectin, carraghenan, gelatin, calcium alginate, a cellulose derivative, chitosan in the presence of acid, polyvinyl chloride, poloxamer such as Pluronic®, polystyrene, and/or polymethyl methacrylate.

21. The device according to the preceding claim, wherein when the substance is a heat-sensitive polymer, the second drop is an enzyme capable of dissolving this gel.

22. The device according to any of claims 13 to 17, wherein the substance is a resin different from the one forming the walls and capable of passing from a liquid state to a solid state or from a solid state to a liquid state.

23. The device according to any of claims 13 to 22, wherein the areas include at least one area for storing an electric insulator fluid and/or at least one area for storing at least one dry reagent and/or at least one area for storing at least one liquid reagent and/or at least one area for storing gas and/or at least one fluorescence detection area.

24. The device according to any of claims 13 to 23, including at least one area for storing the substance as a liquid.

25. The device according to any of claims 13 to 24, including electrowetting displacement means between the different areas.

26. The device according to any of claims 13 to 25, combined with claim 23, wherein DNA hybridization reactions, and/or antigen/antibody reactions between proteins are conducted in the fluorescence detection area.

27. The device according to any of claims 13 to 26, wherein the electrowetting means include a substrate with a hydrophobic surface provided with a network of electrowetting electrodes and with electrically conducting means (10) forming a counter-electrode of the electrowetting electrodes, positioned facing each other, said electrodes and the electrically conducting means being connectible to electric power supply means in order to allow an electrostatic force to be applied to the drop of liquid.

28. The device according to the preceding claim, including a second substrate facing the hydrophobic surface, forming a lid.

29. The device, according to the preceding claim, wherein the counter-electrode is borne by the lid.

30. A method for making a device according to claim 22, including the steps:
- depositing a first resin layer on a substrate,
- depositing a mask and etching said first resin layer in order to form walls (20),
- depositing a second resin layer and etching the latter in order to form plugs.

## Patentansprüche

1. Verfahren zum Trennen von zwei durch wenigstens eine Wand (20) abgegrenzten Zonen, umfassend einen Schritt:
- zum Positionieren - in einer Öffnung (21) der genannten Wand (20), durch Elektrobenetzung - einer Substanz, die auf wenigstens eine äußere Stimulation reagiert, indem sie aus einem flüssigen Zustand in einen festen oder gelförmigen Zustand übergeht, um einen Verschluss zu bilden.

2. Verfahren zum Verbinden von zwei abgegrenzten, durch eine Wand (20) getrennten Zonen, umfassend einen Schritt:
- zum Entfernen - aus einer Öffnung (21) der genannten Wand (20), durch Elektrobenetzung - einer Substanz, die auf wenigstens eine äußere Stimulation reagiert, indem sie aus einem festen oder gelförmigen Zustand in einen flüssigen Zustand übergeht.

3. Verfahren zum Steuern der Verbindung zwischen zwei durch wenigstens eine Wand (20) abgegrenzten Zonen, umfassend:
- ein Trennverfahren nach Anspruch 1,
- ein Verbindungsverfahren nach Anspruch 2.

4. Verfahren nach einem der Ansprüche 1 bis 3, bei dem die Anwendung der Stimulation eine Änderung der Temperatur der Substanz und/oder eine Belichtung von dieser und/oder eine Anwendung eines Magnetfelds und/oder eine Variation einer Ionenkraft und/oder die Herstellung eines Kontakts wenigstens eines sogenannten zweiten Tropfens einer die Zustandsänderung der Substanz bewirkenden Flüssigkeit mit der genannten Substanz umfasst.

5. Verfahren nach dem vorangehenden Anspruch, bei dem die Herstellung des Kontakts des genannten zweiten Tropfens mit der genannten Substanz durch Elektrobenetzung erfolgt.

6. Verfahren nach einem der Ansprüche 1 bis 5, bei dem die genannte Substanz einen Zucker umfasst, der in flüssiger Form in der Öffnung (21) zwischen den beiden Zonen positioniert und dann erhitzt werden kann, bis zu Kristallisation des Zuckers, um die Verbindung zu verschließen, und/oder in kristallisierter Form durch Elektrobenetzung mit einem Tropfen einer wässrigen Lösung in Kontakt gebracht werden kann, der dann in zuckerhaltiger Form entfernt werden kann, um die Verbindung zu öffnen.

7. Verfahren nach dem vorangehenden Anspruch, der während der Kontaktherstellung einen Heizschritt umfasst.

8. Verfahren nach einem der Ansprüche 1 bis 5, bei dem die genannte Substanz ein wärmeempfindliches Polymer umfasst, das in Form von in einem Flüssigkeitstropfen suspendierten Teilchen in der Öffnung (21) positioniert werden kann, zwischen den beiden Zonen, dann bis zur Verflüssigung erhitzt und wieder bis zur Bildung eines Gels abgekühlt werden kann, um die Verbindung zu verschließen, und/oder in Form von Gel in Kontakt gebracht werden kann mit einem Tropfen eines Enzyms, fähig das Gel durch Elektrobenetzung aufzulösen, und/oder erhitzt und in flüssiger, das wärmeempfindliche Polymer enthaltender Form entfernt werden kann, um die Verbindung zu öffnen.

9. Verfahren nach dem vorangehenden Anspruch, bei dem das Polymer Agarose ist und das Enzym β-Agarase. ist.

10. Verfahren nach dem vorangehenden Anspruch, bei dem die Heiztemperatur der nicht aufgelösten Agarose zwischen 40°C und 80°C enthalten ist.

11. Verfahren nach Anspruch 9 oder 10, bei dem die Abkühltemperatur zwischen 4°C und 40°C enthalten ist.

12. Verfahren nach einem der Ansprüche 9 bis 11, bei dem die Heiztemperatur des Agarosegels zwischen 40°C und 80°C enthalten ist.

13. Vorrichtung zur Verschiebung von Tropfen durch Elektrobenetzung, umfassend:
wenigstens zwei durch eine Wand (20) getrennte Zonen (I, I), wenigstens einen in der genannten Wand (20) ausgebildeten Verbindungsdurchgang (21), wenigstens eine erste Substanz in Form eines ersten Tropfens einer Flüssigkeit oder eines Stoffes im festen Zustand oder eines Gels, wobei die genannte Substanz in flüssiger Form sich in einen Stoff im festen Zustand oder ein Gel verwandelt, wenn sie wenigstens einer ersten Stimulation unterzogen wird, und/oder die genannte Substanz in Form eines Stoffes im festen Zustand oder eines Gels sich verflüssigt, wenn sie wenigstens einer zweiten Stimulation unterzogen wird, Einrichtungen zur Verschiebung - durch Elektrobenetzung - der genannten Substanz, um sie in dem Verbindungsdurchgang zu positionieren oder daraus zu entfernen, und Einrichtungen, um auf die Substanz wenigstens eine Stimulation anzuwenden.

14. Vorrichtung nach dem vorangehenden Anspruch, bei der die Einrichtungen zur Anwendung der Stimulation umfassen: wenigstens eine Heiz- und/oder Kühleinrichtung und/oder eine Einrichtung zur Belichtung der Substanz und/oder eine Einrichtung zur Variation einer Ionenkraft und/oder eine Einrichtung zur Anwendung eines Magnetfelds auf die Substanz und/oder eine Einrichtung zur Herstellung eines Kontakts der Substanz mit wenigstens einem sogenannten zweiten Tropfen einer Flüssigkeit, fähig mit der in der Öffnung befindlichen Substanz zu reagieren, um die flüssige Substanz in eine feste oder gelförmige und die feste oder gelförmige in eine flüssige Substanz umzuwandeln.

15. Vorrichtung nach dem vorangehenden Anspruch, bei der die Heizeinrichtung ein Widerstand ist, integriert in das Substrat, auf dem die Wand (20) ausgebildet ist.

16. Vorrichtung nach Anspruch 14 oder 15, bei der die Einrichtungen zur Herstellung des Kontakts zwischen der Substanz und dem zweiten Flüssigkeitstropfen Einrichtungen zur Verschiebung durch Elektrobenetzung umfassen.

17. Vorrichtung nach einem der Ansprüche 13 bis 16, bei der die Trennwand (20) aus Harz ist.

18. Vorrichtung nach einem der Ansprüche 13 bis 17, bei der die Substanz ein Zucker ist.

19. Vorrichtung nach einem der Ansprüche 13 bis 17, bei der die Substanz ein wärmeempfindliches Polymer ist.

20. Vorrichtung nach dem vorangehenden Anspruch, bei der das wärmeempfindliche Polymer Agarose, Pektin, Carragenan, Gelatine, Kalziumalginat, ein Derivat von Zellulose, von Chitosan in Gegenwart von Säure, von Polyvinylchlorid, von Poloxamer wie etwa Pluronic^{®}, von Polystyrol und/oder von Polymethylmethacrylat ist.

21. Vorrichtung nach dem vorangehenden Anspruch, bei der, falls die Substanz ein wärmeempfindliches Polymer ist, der zweite Tropfen ein Enzym ist, fähig dieses Gel aufzulösen.

22. Vorrichtung nach einem der Ansprüche 13 bis 17, bei der die Substanz ein Harz ist, das sich von dem unterscheidet, das die Wände bildet und das fähig ist, von einem flüssigen Zustand in einen festen Zustand oder von einem festen Zustand in einen flüssigen Zustand überzugehen.

23. Vorrichtung nach einem der Ansprüche 13 bis 22, bei der die Zonen wenigstens eine Zone zur Speicherung eines elektrisch isolierenden Fluids und/oder wenigstens eine Zone zur Speicherung wenigstens eines trocken Reagens und/oder wenigstens eine Zone zur Speicherung wenigstens eines flüssigen Reagens und/oder wenigstens eine Zone zur Speicherung von Gas und/oder wenigstens eine Zone zur Detektion von Fluoreszenz umfassen.

24. Vorrichtung nach einem der Ansprüche 13 bis 23 mit wenigstens einer Zone zur Speicherung der Substanz in flüssiger Form.

25. Vorrichtung nach einem der Ansprüche 13 bis 24 mit Einrichtungen zur Verschiebung zwischen den verschiedenen Zonen mittels Elektrobenetzung.

26. Vorrichtung nach einem der Ansprüche 13 bis 25 in Verbindung mit Anspruch 23, bei der in der Fluoreszenzdetektionszone DNA-Hybridisierungsreaktionen und/oder Antigen-Antikörper-Reaktionen zwischen Proteinen realisiert werden.

27. Vorrichtung nach einem der Ansprüche 13 bis 26, bei der die Elektrobenetzungseinrichtungen ein Substrat mit hydrophober Oberfläche umfassen, versehen mit einem Elektrobenetzungs-Elektrodengitter, sowie - den Elektroden gegenüberstehend - die Gegenelektrode zu den Elektrodenbenetzungselektroden bildende elektrisch leitfähige Einrichtungen (10), wobei die genannten Elektroden und die elektrisch leitfähigen Einrichtungen mit elektrischen Versorgungseinrichtungen verbunden sein können, die ermöglichen, auf den Flüssigkeitstropfen eine elektrostatische Kraft anzuwenden.

28. Vorrichtung nach dem vorangehenden Anspruch, ein der hydrophoben Oberfläche gegenüberstehendes, eine Abdeckung bildendes zweites Substrat umfassend.

29. Vorrichtung nach dem vorangehenden Anspruch, bei der die Abdeckung die Gegenelektrode trägt.

30. Verfahren zur Herstellung einer Vorrichtung nach Anspruch 22, die folgenden Schritte umfassend:
- Abscheidung einer ersten Harzschicht auf einem ersten Substrat,
- Abscheidung einer Maske und Ätzung der genannten ersten Harzschicht, um die Wände (20) zu bilden,
- Abscheidung einer zweiten Harzschicht und deren Ätzung, um die Verschlüsse zu bilden.
